# EUROPEAN PATENT SPECIFICATION

(11) **EP 2 389 457 B1**
(45) Date of publication and mention of the grant of the patent: **20.11.2013**
(21) Application number: 08784417.1
(22) Date of filing: 20.08.2008
(51) Int. Cl.: C22B 3/08, C22B 23/00

(54) **AN IMPROVED PROCESS OF LEACHING LATERITIC ORE WITH SULPHURIC ACID**
VERBESSERTES VERFAHREN ZUR SCHWEFELSÄURELAUGUNG VON LATERITERZ
PROCÉDÉ PERFECTIONNÉ DE LIXIVIATION DE MINERAI LATÉRITIQUE AVEC DE L'ACIDE SULFURIQUE

(43) Date of publication of application: 30.11.2011
(73) Proprietor: Intex Resources Asa, 0250 Oslo 45E (NO)
(72) Inventor: PETERSEN, John, Steen, Pasig City (PH)
(74) Representative: Gustad, Trond
(86) International application number: PCT/DK2008/000293
(87) International publication number: WO 2010/020245

(56) References cited:
- WO-A-03/093517
- WO-A-2007/053919
- US-A- 3 804 613
- US-A- 4 410 498
- US-A- 4 548 794

## Description

### Field of the Invention

The present invention related to the recovery of nickel and cobalt from a lateritic ore by means of leaching with sulphuric acid followed by downstream purification and separation steps in order to yield high value, marketable products.

Similar methods are known from US-A- 4 410 498 and US-A- 4 548 794.

In some embodiments, the present invention relates more particularly but not exclusively to the leaching of nickel- and cobalt-containing lateritic ores with sulphuric acid under conditions that minimises the overall sulphuric acid consumption in order to achieve an economically and technically viable degree of nickel and cobalt dissolution from the lateritic ore feedstock.

In some embodiments, the present invention relates more particularly but not exclusively to the separate mining of the high iron (limonite) and high magnesium (saprolite) components of the nickel- and cobalt-containing lateritic ore. For convenience, the split between the limonite and saprolite fractions is typically based on their respective MgO contents, with the limonitic component typically having a MgO content of < 5% and the saprolite fraction typically having a MgO content of > 5%. The corresponding iron (Fe) contents are typically >15% for limonitic ore and <15% for saprolitic ore. These naming conventions will be used throughout this specification.

In some embodiments, the present invention relates more particularly but not exclusively to the treatment of the pregnant reaction slurry derived from the sulphuric acid leaching nickel- and cobalt-containing lateritic ores under conditions that minimises the consumption of a suitable alkaline material in order to neutralise excess acid contained within the pregnant reaction slurry prior to the separation and recovery of high value, marketable products.

In some embodiments, the present invention relates more particularly but not exclusively to the treatment of the pregnant reaction slurry derived from the sulphuric acid leaching nickel- and cobalt-containing lateritic ores under conditions that result in the precipitation an iron-containing leach residue that is readily separated from the nickel- and cobalt-containing pregnant leach solution and washed free of any entrained pregnant leach solution.

In some embodiments, the present invention relates more particularly but not exclusively to the precipitation and recovery of a mixed nickel-cobalt sulphide product from the clarified pregnant leach solution obtained subsequent to excess acid neutralisation and soluble iron precipitation, together with any other required impurity removal steps.

### Background to the Invention

In this specification, where a document, act or item of knowledge is referred to or discussed, this reference or discussion is not an admission that the document, act or item of knowledge or any combination thereof was, at the priority date:
(a) part of common knowledge; or
(b) known to be relevant to attempt to solve any problems with which this specification is concerned.

Although nickel- and cobalt-containing lateritic ores constitute the major terrestrial sources of both nickel and cobalt, their processing is relatively complex and involves both high capital and operating costs. This combination of complexity and high processing costs is a direct reflection of the mineralogical complexity of the lateritic ores themselves and the fact that there are no discrete nickel- and/or cobalt-containing minerals that can be selectively recovered in the form of a high-grade concentrate by conventional physical separation methods such as flotation or use of differential magnetic or density properties. As a consequence it is necessary to process what is essentially run-of-mine ore. The only run-of-mine feed preparation that normally applies is generally limited to screening out coarse, over-size material and crushing/grinding of the product to a size suitable for the subsequent treatment steps.

The subsequent treatment steps are largely dictated by the chemical/mineralogical content of the somewhat upgraded run-of-mine ore. Ferronickel and matte smelting can be applied to high-grade lateritic ores that have relatively low iron and high magnesium contents, whereas leaching with sulphuric acid is generally applied to low-grade lateritic ores.

There are two major processing problems associated with sulphuric acid leaching of lateritic ores. The first relates to the relatively high acid consumption required to achieve economically acceptable rates of nickel and cobalt dissolution, say > 95%, since the high gangue component of the lateritic ore is also a high acid consumer. The second relates to the fact that nickel and cobalt dissolution is not selective with respect to concurrent iron dissolution.

Nickel and cobalt separation and recovery from an iron-containing pregnant solution is metallurgically difficult to achieve. Almost without exception, it is necessary to remove the bulk of the soluble iron before the soluble nickel and cobalt can separated and finally recovered. One way of removing the soluble iron is to carry out the initial leaching step at elevated temperatures. Under such conditions the iron-containing precipitate is generally fairly coarse and crystalline, readily settles and can be washed free of entrained leach solution. At temperatures above about 160°C advantage can be taken of the fact that not only does the iron precipitate as a readily filtered/washed product, but sulphuric acid is regenerated as part of the hydrolysis/precipitation reaction.

Fe₂(SO₄)₃ + 3H₂O → Fe₂O₃ + 3H₂SO₄

Advantage of this reaction is taken in the so-called HPAL (high pressure acid leach) process originally commercialised at Moa Bay and now incorporated into a number of other laterite processing facilities such as those at Vermelho and Murrin Murrin.

Apart from the production of a readily filtered/washed iron-containing product, the above high temperature hydrolysis/precipitation reaction yields a product which is generally regarded as environmentally benign and can be safely discharged into a well-maintained tailings disposal facility.

The potential advantages of the generation of a pregnant leach liquor with a significantly lower soluble iron content are somewhat negated by the fact that additional alkaline material is required to neutralise the excess acid produced by the above hydrolysis/precipitation reaction. In a conventional HPAL circuit this is achieved by addition of limestone or another suitable alkaline material. Whatever its nature, the consumption of this alkaline reagent adds to the overall operating costs of the processing facility.

Since sulphuric acid is a costly consumable, it would also clearly be advantageous if the excess acid produced by the above hydrolysis/precipitation reaction could in fact be recovered and recycled back upstream to the initial leach step.

We have now discovered a way in which it is possible to maximise nickel and cobalt dissolution from the lateritic ore under conditions that minimise both sulphuric acid and alkaline consumption and the generation of a readily filtered/washed iron-containing residue suitable for safe disposal in a conventional tailings disposal facility.

### Summary of the Invention

According to one aspect of the present invention there is provided a method for the sulphuric acid leaching of nickel and cobalt from a lateritic ore, the method comprising the steps of:
(a) separating the nickel- and cobalt-containing lateritic ore into a limonite fraction and a saprolite fraction;
(b) subjecting part of the saprolite fraction to sulphuric acid leaching at atmospheric pressure;
(c) subjecting the limonite fraction to sulphuric acid leaching at elevated temperatures and pressures;
(d) combining slurry from step (c) with slurry from step (b) together with further of the saprolite fraction to cause further leaching of nickel and cobalt from the further saprolite fraction and to neutralise acid; and
(e) subjecting slurry exiting from step (d) to a solid/liquid separation step to produce a pregnant leach liquor and a solids stream.

A key feature of the present invention is the splitting of the saprolite fraction of the lateritic ore into two separate streams. The first stream is subjected to leaching with concentrated sulphuric acid at atmospheric pressure, for example, in a series of agitated tanks at a temperature close to the boiling point. The product from this atmospheric pressure leaching step is then mixed with the slurry, which may have been flashed and cooled, from the high pressure acid leach circuit used to treat the limonite fraction, together with a further stream of the saprolite fraction. Within this particular step, the so-called saprolite neutralisation step, the second stream of the saprolite fraction is used to neutralise the excess acid generated in the limonite high pressure acid leach and the saprolite atmospheric pressure leach steps. At the same time, the amount of nickel and cobalt leached from the total saprolite fraction is maximised. Moreover, the amount of alkali that is required to neutralise excess acid and precipitate any soluble iron ahead of nickel and cobalt is recovered from the final pregnant leach slurry is substantially reduced.

In some embodiments of the present invention, the limonite fraction may be leached in step (a) at a temperature of from about 250-260°C. The limonite fraction may be leached in step (a) with a retention time of about 40 minutes. The sulphuric acid addition rate in step (a) may be about 300-350 kg/t ore. The sulphuric acid addition rate in step (a) may be adjusted to yield a target discharge solution free acid composition of about 50 g/L (before flashing, calculated at 25°C).

In some embodiments of the present invention an amount of saprolite fraction sent to step (b) may be about 50%, on a dry weight basis, of the amount of the limonite fraction subjected to high pressure acid leaching in step (c). Step (b) may be operated at a temperature in the range of 95-100°C. Step (b) may be operated with a concentrated sulphuric acid addition rate of 900-1000 kg/t ore. The free acid concentration of the leached saprolite fraction in step (b) may be of the order of 35-40 g/L (calculated at 25°C).

In some embodiments of the present invention, the amount of further saprolite added to step (d) may be about 35% of the amount of limonite processed in the high pressure acid leach circuit in step (c). Step (d) may be operated at about 90°C. Step (c) may operated with a total retention time of about 6 h. Step (c) is operated such that it yields a final pregnant leach slurry with a free acid concentration of about 5-10 g/L (calculated at 25°C).

Step (c) is operated such that at least some of the dissolved iron that goes into solution in this leaching step re-precipitates as Fe₂O₃ and sulphuric acid is regenerated. Thus, step (c) comprises a high pressure acid leach (HPAL) process.

Desirably, the slurry from step (c) is cooled prior to mixing with the slurry from step (b). The slurry from step (c) may be cooled by passing it through a flash vessel to cause flash cooling thereof. Other cooling methods known to the person skilled in the art may also be used.

The solid/liquid separation in step (e) may utilise any suitable solid/liquid separation step known to be suitable to the person skilled in the art. For example, the solid/liquid separation step may comprise a multistage countercurrent decantation. Other solid/liquid separation steps, such as filtration, thickening, clarification, centrifugation or settling, may also be used.

Step (e) of the present invention produces a pregnant leach liquor. The pregnant leach liquor from step (e) may be further treated to recover a product containing nickel and cobalt. This step may involve any treatment known to the person skilled in the art for recovering a product containing nickel and cobalt. The product containing nickel and cobalt may contain nickel and cobalt compounds. In one embodiment, the product containing nickel and cobalt may comprise a mixed precipitate.

In one embodiment, the present invention further comprises the steps of:
(f) subjecting the pregnant leach liquor to a neutralisation and impurity removal step; and
(g) precipitating a mixed nickel-cobalt sulphide from a clarified solution exiting step (f).

In some embodiments, step (f) may comprise adding a neutralising agent to the pregnant leach liquor, optionally in the presence of air or oxygen, to oxidise any ferrous iron to ferric iron. The pH of the solution at that stage may be about 3.5. The solution may be further treated to remove any soluble copper and zinc and reduce any chromium(VI) to chromium(III) and manganese(IV) to manganese(II). This may be achieved, for example, by controlled injection hydrogen sulphide gas into the pregnant leach liquor. Precipitates may then be removed from the treated pregnant leach liquor using a solid/liquid separation technique.

The pregnant leach liquor may then be treated to precipitate a mixed nickel-cobalt precipitate. The mixed nickel-cobalt precipitate may be a mixed nickel-cobalt sulphide. For example, the leach liquor may have further hydrogen sulphide gas injected into it to cause precipitation of a mixed nickel-sulphide product. Alternatively, sodium sulphide may be added to the pregnant leach liquor to cause precipitation of a mixed nickel-sulphide product.

In another embodiment, the pregnant leach liquor may be treated by adding further neutralising agent, such as an alkaline material, to cause precipitation of a nickel-cobalt hydroxide precipitate. The neutralising agent may be limestone, although other alkaline materials, such as lime or magnesia, may also be used should they be readily or inexpensively available.

The mixed nickel-cobalt precipitate may be separated from the barren liquor. The mixed nickel-cobalt liquor may be further treated to recover nickel and cobalt therefrom. The mixed nickel-cobalt precipitate may be transported to a refinery to recover nickel and cobalt therefrom.

In other embodiments, the pregnant leach liquor may alternatively be treated to recover nickel and cobalt therefrom.

The solids containing stream from step (e) is suitably treated for disposal, such as in a tailings disposal facility or a landfill. The solids containing stream may be treated to increase its pH prior to disposal.

### Detailed Description of the Invention

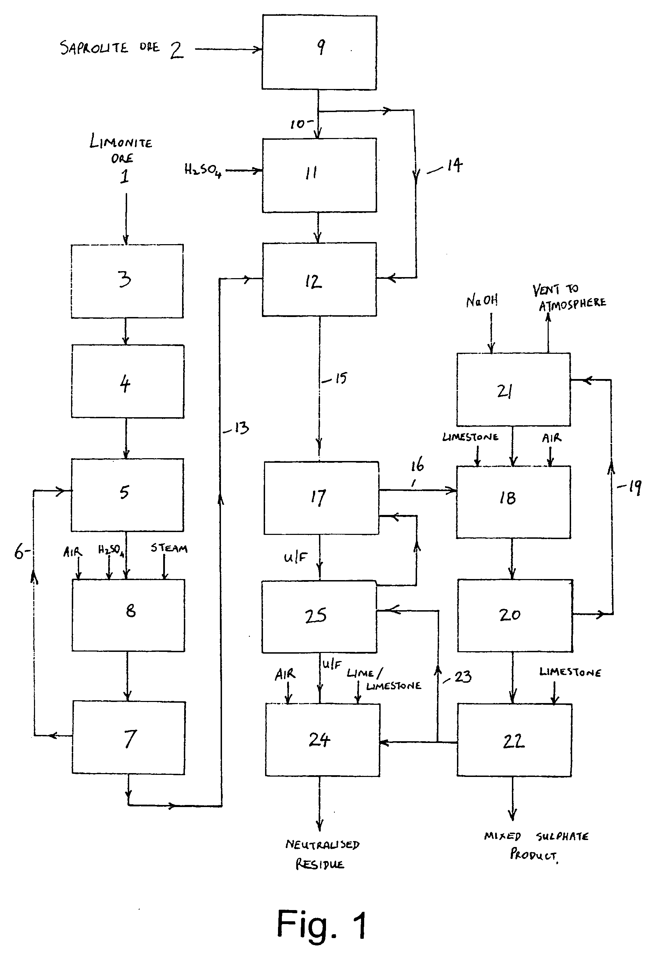

The following detailed description of the presently preferred but non-limiting embodiment of the invention refers to the overall flowsheet outlined in Figure 1. All those skilled in the art will appreciate that the flowsheet outlined in Figure 1 does not include a number of supplementary unit steps and process streams that are required to maintain the overall process water balance, disposal of solid and waste streams, etc.

In the embodiment shown in Figure 1, the nickel- and cobalt-containing lateritic ore is first separated into its limonite [1] and saprolite [2] fractions based upon a detailed geometallurgical analysis and selective mining of the ore resource and is typically based upon a split based on its MgO content - Ore classified with a MgO content < 5% is generally classified as limonitic ore, whereas ore with a MgO content > 5% is generally classified as saprolite ore.

The limonite fraction [1] is first subjected to a pretreatment step [3] where it is first subjected to a primary scrubber/trommel stage, then screened with the oversize being cyclone classified to remove any coarse chromite before the undersize and chromite-free component are ground in a suitable comminution circuit, such as a ball mill. The ball mill product will typically have a P₁₀₀ of 150 micron and a P₈₀ of 50 micron and is thickened to about 40% solids and transferred to a suitable storage tank [4]. The thickened slurry is then heated [5] to about 195°C using steam [6] produced in the downstream pressure leach flash vessels [7] before being pumped into the high pressure leach circuit [8] which consists of one or more multi-stage autoclaves. Air, steam and controlled quantities of concentrated sulphuric acid are added to the high pressure leach autoclaves in order to achieve the designed extent of nickel and cobalt dissolution, typically > 97%, at the specified operating temperature, typically 250-260°C, and within the specified retention time, typically about 40 minutes. The sulphuric acid addition rate is typically 300-350 kg/t ore and is adjusted as required to yield a target discharge solution free acid composition of about 50 g/L (before flashing, calculated at 25°C).

The saprolite fraction [2] of the lateritic ore is subjected to a pretreatment step [9] which includes a primary scrubber/trommel stage followed removal of coarse reject material by screening. The screen undersize, typically -5 mm, is then ground in a suitable comminution circuit such as a ball mill [9], to yield a final product that typically has a P₁₀₀ of 500 micron and a P₈₀ of 106 micron. The mill product is then thickened to about 35% solids.

A specified amount of the thickened saprolite fraction [10] is then pumped to an atmospheric pressure leach circuit [11] where it is reacted with concentrated sulphuric acid. The amount of thickened saprolite fraction pumped to the atmospheric pressure leach circuit [11] is typically about 50%, on a dry weight basis, of the amount of the limonite fraction [1] subjected to high pressure acid leaching [8]. The actual ratio is determined by the relative compositions of the two feed materials and the operating criteria of the high pressure acid leach circuit [8].

The atmospheric pressure acid leach circuit [11] typically consists of one or more leach trains, each train consisting of one ore more reactor. Typical operating temperatures are in the range 95-100°C, with a concentrated sulphuric acid addition rate of 900-1000 kg/t ore and a retention time, typically 2 h, required to achieve the design extent of nickel and cobalt from the saprolite fraction. Typically the free acid concentration of the leached saprolite fraction will be of the order of 35-40 g/L (calculated at 25°C).

The product slurry from the atmospheric pressure leach circuit is pumped to a saprolite neutralisation circuit [12] consisting of one or more trains, each train having one or more reactors. Typically the saprolite neutralisation circuit will consist of 4-6 reactors. Here the product slurry is mixed with
(a) the flashed slurry [13] from the high pressure acid leach circuit [8] and
(b) a specified amount of fresh saprolite slurry [14] derived from the saprolite fraction pretreatment step [9]. Typically the amount of fresh saprolite slurry [14] added at this stage is typically about 35% of the amount of limonite fraction [1] processed in the high pressure acid leach circuit [8].

Typically the saprolite neutralisation circuit is operated at about 90°C with a total retention time of about 6 h and yields a final pregnant leach slurry [15] with a free acid concentration of about 5-10 g/L (calculated at 25°C).

The final pregnant leach slurry [15] is pumped to a suitable solids/liquid separation, typically a series of counter current decantation (CCD) thickeners. Typically a total of seven CCD thickeners will be used to ensure maximum recovery of a clarified pregnant leach solution with minimal losses of soluble nickel and cobalt through inefficient interstage washing. The overflow [16] from the first CCD thickener [17] constitutes the pregnant leach solution that is forwarded to a final solution neutralisation and solid/liquid separation step [18] where limestone and air are used oxidise any ferrous iron and yield a final liquor pH of about 3.5.

As part of the final solution neutralisation and solid/liquid separation step [18] it is advantageous to remove any soluble copper and zinc and reduce any chromium(VI) to chromium(III) and manganese(IV) to manganese(II) in order to improve the quality of the final mixed nickel-cobalt sulphide product of the overall process flowsheet. These impurity removal/control steps are achieved by the controlled injection of hydrogen sulphide gas, recovered as vent gas from the downstream sulphide precipitation circuit [20] and subjected to an appropriate cleaning step [21] by suitable means, such as an in-line mixer. Caustic soda (NaOH) may be injected into the hydrogen sulphide using an in-line mixer as part of the cleaning step.

The sulphide precipitation circuit [20] includes injection of hydrogen sulphide gas or addition of sodium sulphide to cause the precipitation of a mixed nickel-cobalt sulphide precipitate.

The mixed nickel-cobalt sulphide precipitation circuit [20] incorporates facilities for the recycling of fine product as seed material recovered by cycloning [22] of the product discharged from the sulphide precipitation circuit. The coarse cyclone underflow is counter currently washed, dewatered and transferred to the product handling area.

The barren liquor remaining after final product recovery is stripped of any remaining hydrogen sulphide and reacted with limestone slurry to produce a CCD wash liquor [23] with a target pH of about 2. Any excess barren solution is directed to the final neutralisation circuit [24] which treats the underflow from the last CCD thickener [25]. Air and lime/limestone are added to the final neutralisation circuit to raise the pH of the final slurry to about 8.5 before it is discharged to the final disposal area.

In the preceding description of the invention and in the claims which follow, except where the context requires otherwise due to express language or necessary implication, the words "comprise" or variations such as "comprises" or "comprising" are used in an inclusive sense, i.e., specify the presence of the stated features, but do not preclude the presence or addition of further features in various embodiments of the invention.

It is to be understood that this invention and the preferred embodiments are not limited to the particular materials and process conditions described, as these may vary. It is also understood that the terminology used herein is for the purpose of describing particular embodiments only, and is not intended to limit the scope of the present invention in any way.

It is also to be noted that, as used herein, the singular forms of "a", "an" and "the" include the plural unless the context requires otherwise. Unless defined otherwise, all technical and scientific terms herein have the same meanings as commonly understood by one of ordinary skill in the art to which the invention belongs.

## Claims

1. A method for the sulphuric acid leaching of nickel and cobalt from a lateritic ore, the method comprising the steps of:
(a) separating the nickel- and cobalt-containing lateritic ore into a limonite fraction and a saprolite fraction;
(b) subjecting part of the saprolite fraction to sulphuric acid leaching at atmospheric pressure;
(c) subjecting the limonite fraction to sulphuric acid leaching at elevated temperatures and pressures;
(d) combining slurry from step (c) with from step (b) together with further of the saprolite fraction to cause further leaching of nickel and cobalt from the further saprolite fraction and to neutralise acid; and
(e) subjecting slurry exiting from step (d) to a solid/liquid separation step to produce a pregnant leach liquor and a solids stream.

2. A method as claimed in claim 1 wherein the slurry from step (c) is cooled prior to mixing with the slurry from step (b).

3. A method as claimed in claim 2 wherein the slurry from step (c) is cooled by passing it through a flash vessel to cause flash cooling thereof.

4. A method as claimed in any one of the preceding claims wherein the solid/liquid separation in step (e) comprises a multistage countercurrent decantation.

5. A method as claimed in any one of the preceding claims wherein the pregnant leach liquor from step (e) is further treated to recover a product containing nickel and cobalt.

6. A method as claimed in claim 5 wherein the product containing nickel and cobalt comprises a mixed precipitate.

7. A method as claimed in any one of the preceding claims further comprising the steps of:
(f) subjecting the pregnant leach liquor to a neutralisation and impurity removal step; and
(g) precipitating a mixed nickel-cobalt precipitate from a clarified solution exiting step (f).

8. A method as claimed in claim 7 wherein step (f) comprises adding a neutralising agent to the pregnant leach liquor in the presence of air or oxygen, to oxidise any ferrous iron to ferric iron and to adjust the pH of the solution to about 3.5.

9. A method as claimed in claim 7 or claim 8 wherein the solution is further treated to remove any soluble copper and zinc and reduce any chromium(Vl) to chromium(III) and manganese(IV) to manganese(II).

10. A method as claimed in claim 9 comprising controlled injection hydrogen sulphide gas into the pregnant leach liquor.

11. A method as claimed in any one of claims 7 to 10 wherein step (g) comprises treating the pregnant leach liquor to precipitate a mixed nickel-cobalt sulphide precipitate.

12. A method as claimed in claim 11 comprising injecting hydrogen sulphide gas into the pregnant leach liquor or adding sodium sulphide added to the pregnant leach liquor to cause precipitation of the mixed nickel-sulphide product.

13. A method as claimed in any one of claims 7 to 12 wherein the mixed nickel-cobalt precipitate is separated from the barren liquor.

14. A method as claimed in any one of the preceding claims wherein the solids containing stream from step (e) is treated for disposal.

15. A method as claimed in any one of the preceding claims wherein the limonite fraction is leached in step (a) at a temperature of from about 250-260°C.

16. A method as claimed in any one of the preceding claims wherein the limonite fraction is leached in step (a) with a retention timeof about 40 minutes.

17. A method as claimed in any one of the preceding claims wherein the sulphuric acid addition rate in step (a) is about 300-350 kg/t ore.

18. A method as claimed in any one of the preceding claims wherein the sulphuric acid addition rate in step (a) is adjusted to yield a target discharge solution free acid composition of about 50 g/L (before flashing, calculated at 25°C).

19. A method as claimed in any one of the preceding claims wherein an amount of saprolite fraction sent to step (b) is about 50%, on a dry weight basis, of the amount of the limonite fraction subjected to high pressure acid leaching in step (c).

20. A method as claimed in any one of the preceding claims wherein step (b) is operated at a temperature in the range of 95-100°C.

21. A method as claimed in any one of the preceding claims wherein step (b) is operated with a concentrated sulphuric acid addition rate of 900-1000 kg/t ore.

22. A method as claimed in any one of the preceding claims wherein the free acid concentration of the leached saprolite fraction in step (b) is of the order of 35-40 g/L (calculated at 25°C).

23. A method as claimed in any one of the preceding claims wherein the amount of further saprolite added to step (d) is about 35% of the amount of limonite processed in the high pressure acid leach circuit in step (c).

24. A method as claimed in any one of the preceding claims wherein step (d) is operated at about 90°C.

25. A method as claimed in any one of the preceding claims wherein step (d) is operated with a total retention time of about 6 h.

26. A method as claimed in any one of the preceding claims wherein step (d) is operated such that it yields a final pregnant leach slurry with a free acid concentration of about 5-10 g/L (calculated at 25°C).

## Patentansprüche

1. Verfahren zum Herauslaugen von Nickel und Cobalt aus einem Lateriterz durch Schwefelsäurelaugung, wobei das Verfahren folgende Schritte umfasst:
(a) Trennen des nickel- und cobalthaltigen Lateriterzes in eine Limonitfraktion und eine Saprolitfraktion;
(b) Schwefelsäurelaugen eines Teils der Saprolitfraktion bei Atmosphärendruck;
(c) Schwefelsäurelaugen der Limonitfraktion bei erhöhten Temperaturen und Drücken;
(d) Kombinieren von Schlamm aus Schritt (c) mit solchem aus Schritt (b) zusammen mit einer weiteren Menge der Saprolitfraktion, um ein weiteres Herauslaugen von Nickel und Cobalt aus der weiteren Saprolitfraktion zu bewirken und Säure zu neutralisieren; und
(e) Behandeln von in Schritt (d) erhaltenem Schlamm in einem Fest/flüssig-Trennschritt zur Gewinnung einer metallhaltigen Lauge und eines Feststoffstroms.

2. Verfahren nach Anspruch 1, wobei der Schlamm aus Schritt (c) vor dem Mischen mit dem Schlamm aus Schritt (b) abgekühlt wird.

3. Verfahren nach Anspruch 2, wobei der Schlamm aus Schritt (c) abgekühlt wird, indem er durch eine Entspannungskammer geleitet wird, um eine Entspannungskühlung desselben zu bewirken.

4. Verfahren nach einem der vorangehenden Ansprüche, wobei die Fest/flüssig-Trennung in Schritt (e) eine mehrstufige Gegenstromdekantation umfasst.

5. Verfahren nach einem der vorangehenden Ansprüche, wobei die metallhaltige Lauge aus Schritt (e) weiterbehandelt wird, um ein nickel- und cobalthaltiges Produkt zu gewinnen.

6. Verfahren nach Anspruch 5, wobei das nickel- und cobalthaltige Produkt einen gemischten Niederschlag umfasst.

7. Verfahren nach einem der vorangehenden Ansprüche, das weiterhin folgende Schritte umfasst:
(f) Behandeln der metallhaltigen Lauge in einem Neutralisations- und Verunreinigungsentfernungsschritt; und
(g) Ausfällen eines gemischten Nickel-Cobalt-Niederschlags aus einer in Schritt (f) erhaltenen geklärten Lösung.

8. Verfahren nach Anspruch 7, wobei Schritt (f) die Zugabe eines Neutralisationsmittels zu der metallhaltigen Lauge in Gegenwart von Luft oder Sauerstoff umfasst, um alles zweiwertige Eisen zu dreiwertigem Eisen zu oxidieren und den pH-Wert der Lösung auf ca. 3,5 einzustellen.

9. Verfahren nach Anspruch 7 oder Anspruch 8, wobei die Lösung weiterbehandelt wird, um alles lösliche Kupfer und Zink zu entfernen und alles Chrom(VI) zu Chrom(III) und Mangan(IV) zu Mangan(II) zu reduzieren.

10. Verfahren nach Anspruch 9, das die kontrollierte Injektion von Schwefelwasserstoffgas in die metallhaltige Lauge umfasst.

11. Verfahren nach einem der Ansprüche 7 bis 10, wobei Schritt (g) die Behandlung der metallhaltigen Lauge zwecks Ausfällung eines gemischten Nickel-Cobaltsulfid-Niederschlags umfasst.

12. Verfahren nach Anspruch 11, das die Injektion von Schwefelwasserstoffgas in die metallhaltige Lauge oder die Zugabe von Natriumsulfid zu der metallhaltigen Lauge umfasst, um die Ausfällung des gemischten Nickel-Sulfid-Produkts zu bewirken.

13. Verfahren nach einem der Ansprüche 7 bis 12, wobei der gemischte Nickel-Cobalt-Niederschlag von der Armlauge getrennt wird.

14. Verfahren nach einem der vorangehenden Ansprüche, wobei der feststoffhaltige Strom aus Schritt (e) zwecks Entsorgung behandelt wird.

15. Verfahren nach einem der vorangehenden Ansprüche, wobei die Laugung der Limonitfraktion in Schritt (a) bei einer Temperatur von ca. 250-260 °C erfolgt.

16. Verfahren nach einem der vorangehenden Ansprüche, wobei die Laugung der Limonitfraktion in Schritt (a) mit einer Verweilzeit von ca. 40 Minuten erfolgt.

17. Verfahren nach einem der vorangehenden Ansprüche, wobei die Zugabemenge von Schwefelsäure in Schritt (a) ca. 300-350 kg/t Erz beträgt.

18. Verfahren nach einem der vorangehenden Ansprüche, wobei die Zugabemenge von Schwefelsäure in Schritt (a) so eingestellt wird, dass man eine freie Säurezusammensetzung der abgegebenen Ziellösung von ca. 50 g/l erhält (vor Entspannung, berechnet bei 25°C).

19. Verfahren nach einem der vorangehenden Ansprüche, wobei eine Menge der in Schritt (b) eingesetzten Saprolitfraktion ca. 50 %, basierend auf der Trockenmasse, der Menge der in Schritt (c) mittels Hochdruck-Säurelaugung behandelten Limonitfraktion entspricht.

20. Verfahren nach einem der vorangehenden Ansprüche, wobei Schritt (b) bei einer Temperatur im Bereich von 95-100 °C durchgeführt wird.

21. Verfahren nach einem der vorangehenden Ansprüche, wobei Schritt (b) mit einer Zugabemenge von konzentrierter Schwefelsäure von 900-1000 kg/t Erz durchgeführt wird.

22. Verfahren nach einem der vorangehenden Ansprüche, wobei die freie Säurekonzentration der gelaugten Saprolitfraktion in Schritt (b) in der Größenordnung von 35-40 g/l liegt (berechnet bei 25°C).

23. Verfahren nach einem der vorangehenden Ansprüche, wobei die Menge des in Schritt (d) zugegebenen weiteren Saprolits ca. 35 % der im Hochdruck-Säurelaugungskreis in Schritt (c) verarbeiteten Menge an Limonit entspricht.

24. Verfahren nach einem der vorangehenden Ansprüche, wobei Schritt (d) bei ca. 90°C durchgeführt wird.

25. Verfahren nach einem der vorangehenden Ansprüche, wobei Schritt (d) mit einer Gesamtverweilzeit von ca. 6 h durchgeführt wird.

26. Verfahren nach einem der vorangehenden Ansprüche, wobei Schritt (d) so durchgeführt wird, dass man einen endgültigen metallhaltigen Laugungsschlamm mit einer freien Säurekonzentration von ca. 5-10 g/l erhält (berechnet bei 25°C).

## Revendications

1. Procédé de lixiviation à l'acide sulfurique de nickel et de cobalt d'un minerai latéritique, le procédé comprenant les étapes consistant à :
(a) séparer le minerai latéritique contenant du nickel et du cobalt en une fraction de limonite et une fraction de saprolite ;
(b) soumettre une partie de la fraction de saprolite à une lixiviation à l'acide sulfurique à pression atmosphère ;
(c) soumettre la fraction de limonite à une lixiviation à l'acide sulfurique à des températures et des pressions élevées ;
(d) combiner la suspension de l'étape (c) avec celle de l'étape (b) conjointement avec une partie de la fraction de saprolite pour provoquer une autre lixiviation du nickel et du cobalt de l'autre fraction de saprolite et neutraliser l'acide ; et
(e) soumettre la suspension sortant de l'étape (d) à une étape de séparation solide/liquide pour produire une liqueur de lixiviation riche et un courant de solides.

2. Procédé selon la revendication 1, dans lequel la suspension de l'étape (c) est refroidie avant de la mélanger à la suspension de l'étape (b).

3. Procédé selon la revendication 2, dans lequel la suspension de l'étape (c) est refroidie en la faisant passer à travers une cuve de refroidissement éclair pour y provoquer son refroidissement éclair.

4. Procédé selon l'une quelconque des revendications précédentes, dans lequel la séparation solide/liquide à l'étape (e) comprend une décantation à contre-courant en plusieurs stades.

5. Procédé selon l'une quelconque des revendications précédentes, dans lequel la liqueur de lixiviation riche de l'étape (e) est encore traitée pour récupérer un produit contenant du nickel et du cobalt.

6. Procédé selon la revendication 5, dans lequel le produit contenant du nickel et du cobalt comprend un précipité mixte.

7. Procédé selon l'une quelconque des revendications précédentes, comprenant par ailleurs les étapes consistant à :
(f) soumettre la liqueur de lixiviation riche à une étape de neutralisation et d'élimination d'impuretés ; et
(g) précipiter un précipité mixte de nickel et de cobalt à partir d'une solution clarifiée sortant de l' étape (f).

8. Procédé selon la revendication 7, dans lequel l'étape (f) comprend l'addition d'un agent de neutralisation à la liqueur de lixiviation riche en présence d'air ou d'oxygène pour oxyder le fer ferreux éventuellement présent en fer ferrique et pour ajuster le pH de la solution à environ 3,5.

9. Procédé selon la revendication 7 ou la revendication 8, dans lequel la solution est encore traitée pour éliminer le cuivre et le zinc solubles éventuels et réduire le chrome(VI) éventuel en chrome(III) et le manganèse (IV) éventuel en manganèse(II).

10. Procédé selon la revendication 9, comprenant l'injection contrôlée de gaz de sulfure d'hydrogène dans la liqueur de lixiviation riche.

11. Procédé selon l'une quelconque des revendications 7 à 10, dans lequel l'étape (g) comprend le traitement de la liqueur de lixiviation riche pour précipiter un précipité mixte de sulfure de nickel et de cobalt.

12. Procédé selon la revendication 11, comprenant l'injection de gaz de sulfure d'hydrogène dans la liqueur de lixiviation riche ou l'addition de sulfure de sodium ajouté à la liqueur de lixiviation riche pour provoquer la précipitation du produit mixte de sulfure de nickel.

13. Procédé selon l'une quelconque des revendications 7 à 12, dans lequel le précipité mixte de nickel et de cobalt est séparé de la liqueur stérile.

14. Procédé selon l'une quelconque des revendications précédentes, dans lequel le courant contenant des solides provenant de l'étape (e) est traité pour être mis au rebut.

15. Procédé selon l'une quelconque des revendications précédentes, dans lequel la fraction de limonite est lixiviée à l'étape (a) à une température d'environ 250 à 260 °C.

16. Procédé selon l'une quelconque des revendications précédentes, dans lequel la fraction de limonite est lixiviée à l'étape (a) avec un temps de rétention d'environ 40 minutes.

17. Procédé selon l'une quelconque des revendications précédentes, dans lequel le taux d'addition d'acide sulfurique à l'étape (a) est d'environ 300 à 300 kg/t de minerai.

18. Procédé selon l'une quelconque des revendications précédentes, dans lequel le taux d'addition d'acide sulfurique à l'étape (a) est ajusté pour donner une composition d'acide libre en solution de décharge cible d'environ 50 g/L (avant traitement éclair, calculé à 25 °C).

19. Procédé selon l'une quelconque des revendications précédentes, dans lequel la quantité de fraction de saprolite envoyée à l'étape (b) est d'environ 50 %, sur la base du poids à sec, de la quantité de fraction de limonite soumise à une lixiviation à l'acide sous pression élevée à l'étape (c).

20. Procédé selon l'une quelconque des revendications précédentes, dans lequel l'étape (b) est exploitée à une température dans la plage de 95 à 100 °C.

21. Procédé selon l'une quelconque des revendications précédentes, dans lequel l'étape (b) est exploitée avec un taux d'addition d'acide sulfurique concentré de 900 à 1000 kg/t de minerai.

22. Procédé selon l'une quelconque des revendications précédentes, dans lequel la concentration en acide libre de la fraction de saprolite lixiviée à l'étape (b) est de l'ordre de 35 à 40 g/L (calculé à 25 °C).

23. Procédé selon l'une quelconque des revendications précédentes, dans lequel la quantité de saprolite encore ajoutée à l'étape (d) est d'environ 35 % de la quantité de limonite traitée dans le circuit de lixiviation à l'acide sous haute pression de l'étape (c).

24. Procédé selon l'une quelconque des revendications précédentes, dans lequel l'étape (d) est exploitée à environ 90 °C.

25. Procédé selon l'une quelconque des revendications précédentes, dans lequel l'étape (d) est exploitée avec un temps de rétention total d'environ 6 heures.

26. Procédé selon l'une quelconque des revendications précédentes, dans lequel l'étape (d) est exploitée de sorte qu'elle donne une suspension de lixiviation riche finale avec une concentration en acide libre d'environ 5 à 10 g/L (calculée à 25 °C).
